# EUROPEAN PATENT SPECIFICATION

(11) **EP 1 832 518 B1**
(45) Date of publication and mention of the grant of the patent: **01.07.2009**
(21) Application number: 06425149.9
(22) Date of filing: 07.03.2006
(51) Int. Cl.: B65B 51/30, B65B 9/20

(54) **Packaging machine for producing sealed packages of pourable food products**
Verpackungsmaschine zur Herstellung von versiegelten Verpackungen mit fliessfähigen Nahrungsmitteln
Machine d'emballage pour former des emballages scellés contenant des produits alimentaires fluides

(43) Date of publication of application: 12.09.2007
(73) Proprietor: Tetra Laval Holdings & Finance SA, 1009 Pully (CH)
(72) Inventor: Santi, Franco, 41100 Modena (IT); Caselli, Stefano, 41100 Modena (IT); Vignoli, Riccardo, 41100 Modena (IT); Tomei, Marco, 42048 Rubiera (IT)
(74) Representative: D'Angelo, Fabio

(56) References cited:
- EP-A- 0 829 426
- EP-A- 0 887 265
- EP-A- 1 101 700
- WO-A-01/81175
- US-A- 4 109 792
- US-A- 5 220 771

## Description

The present invention relates to a packaging machine for producing sealed packages of pourable food products.

As is known, many pourable food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may be defined by a layer of fibrous material, e.g. paper, or mineral-filled polypropylene material, and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH) film, which is superimposed on a layer of heat-seal plastic material, and is in turn covered with another layer of heat-seal plastic material forming the inner face of the package eventually contacting the food product.

As is known, packages of this sort are produced on fully automatic packaging machines, on which a continuous tube is formed from the web-fed packaging material. More specifically, the web of packaging material is unwound off a reel and fed through an aseptic chamber on the packaging machine, where it is sterilized, e.g. by applying a sterilizing agent such as hydrogen peroxide, which is subsequently evaporated by heating, and/or by subjecting the packaging material to radiation of appropriate wavelength and intensity; and the sterilized web is maintained in a closed, sterile environment, and is folded into a cylinder and sealed longitudinally to form a continuous tube in known manner.

The tube of packaging material, which in effect forms an extension of the aseptic chamber, is fed continuously along a vertical direction, is filled with the sterilized or sterile-processed food product, and is fed through a forming unit to form the individual packages.

More specifically, the tube is fed, coaxially with said vertical direction, to the forming unit by a number of support and guide assemblies.

The forming unit interacts with the tube to heat seal it at equally spaced cross sections and form pillow packs connected to the tube by transverse sealing strips.

The pillow packs are then separated from the tube by cutting the relative transverse sealing strips, and are conveyed to a folding station where they are folded mechanically to form respective finished parallelepiped-shaped packages.

Forming units are known, as described for example in European Patent EP-B-0887265, which discloses a packaging machine according to the preamble of claim 1, which comprise two chain conveyors defining respective endless paths and fitted with respective numbers of jaws. The two paths have respective branches substantially facing and parallel to each other, and between which the tube of packaging material is fed so that the jaws on one conveyor cooperate with corresponding jaws on the other conveyor along said branches of the respective paths, to grip the tube at a number of successive cross sections, and to seal and cut the packs.

In other words, each jaw on one conveyor and the corresponding jaw on the other conveyor define a forming assembly which interacts cyclically with the tube of packaging material.

The portion of the tube gripped between each pair of jaws is normally sealed by heating means carried by one of the jaws, and which locally melt the layers of heat-seal plastic material gripped tightly between the jaws.

Forming units are also known comprising only two pairs of jaws, which act cyclically and successively on the tube of packaging material to grip and seal, e.g. heat seal, it along equally spaced cross sections. A forming unit of this type is featured on packaging machines TB/21, TBA/19, TBA/21 and Tetra Pak A3 produced by Tetra Pak Carton Ambient AB, Ruben Rausings gata, LUND (Sweden), and by Tetra Pak Carton Ambient S.p.A., Via Delfini 1, 41100 Modena (Italy).

As each pair of jaws completes the sealing operation, a cutter carried by one of the jaws is activated, and interacts with the tube of packaging material to cut it along a centre line of the cross section just sealed, and so detach a pillow pack from the bottom end of the tube of packaging material. The bottom end being sealed transversely, the relative jaws, on reaching the bottom dead-centre position, can be opened to avoid interfering with the top portion of the tube. At the same time, the other pair of jaws, operated in exactly the same way, moves down from the top dead-centre position, and repeats the above grip/form, seal and cut process.

Though excellent in many respects, machines of the above type still leave room for further improvement, particularly as regards avoiding the effects of the shockwave produced inside the food product column inside the tube as the jaws impact the tube.

More specifically, as is known, the food product is poured constantly into the tube, whereas the cyclic action of the jaws on the tube produces stages in which less than the required amount of food product is supplied, and which alternate with stages in which more than the required amount of food product is actually poured into the tube, thus resulting in pulses of the food product inside the tube, which tends to "inflate" and "deflate" cyclically.

As the jaws impact the tube filled with the food product, a shockwave is produced in the product, thus increasing the pressure on the edges of the tube. The increase in pressure occasionally produces cracks in the packaging material at the support and guide assembly immediately upstream from the forming unit; which cracks tend to become even more noticeable during subsequent forming and folding of the tube of packaging material, so that the corresponding finished packages must be rejected.

It is an object of the present invention to provide a packaging machine designed to eliminate the aforementioned drawback.

According to the present invention, there is provided a packaging machine for producing sealed packages of pourable food products from a tube of sheet packaging material fed along a vertical path and having preferential fold lines extending perpendicularly to said vertical path; said packaging machine comprising:
- at least one pair of jaws movable cyclically, along respective endless lateral paths extending on opposite sides of said vertical path, to grip and seal said tube of packaging material at equally spaced cross sections defining opposite sealing strips of said packages being formed;
- filling means for feeding said tube of packaging material with said food product; and
- at least one support and guide assembly located a given distance from said jaws to feed said tube of packaging material to the jaws coaxially with said vertical path;
characterized in that said support and guide assembly is so positioned, along said vertical path, as to act directly on one of said fold lines of said packaging material when said jaws are positioned contacting said packaging material and are located a given distance apart equal to the final width of the package being formed.

A preferred, non-limiting embodiment of the present invention will be described by way of example with reference to the accompanying drawings, in which:
Figure 1 shows a schematic side view, with parts removed for clarity, of a packaging machine in accordance with the present invention for producing sealed packages of pourable food products;
Figure 2 shows a larger-scale side view of a detail of the Figure 1 packaging machine;
Figure 3 shows a front view of the Figure 2 detail with parts removed for clarity;
Figure 4 shows a larger-scale view in perspective of a forming jaw of the Figure 1 packaging machine.

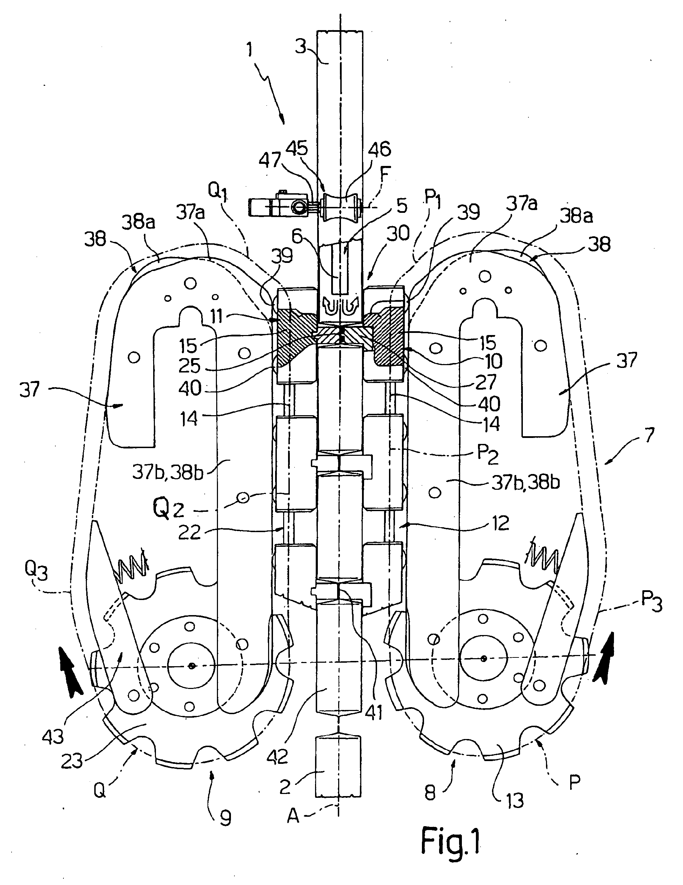

Number 1 in Figure 1 indicates as a whole a packaging machine for continuously producing sealed packages 2 of a pourable food product, such as pasteurized or UHT milk, fruit juice, wine, etc., from a tube 3 of packaging material.

Tube 3 is formed in known manner by longitudinally folding and sealing a web of heat-seal sheet packaging material (known and not shown), and is fed to machine 1 along a vertical path A by known devices not shown.

The web of packaging material has a multilayer structure (not shown), and conveniently comprises a base layer for stiffness and strength, which may be defined by a layer of fibrous material, e.g. paper, or mineral-filled polypropylene material, and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH) film, which is superimposed on a layer of heat-seal plastic material, and is in turn covered with another layer of heat-seal plastic material forming the inner face of the package eventually contacting the food product.

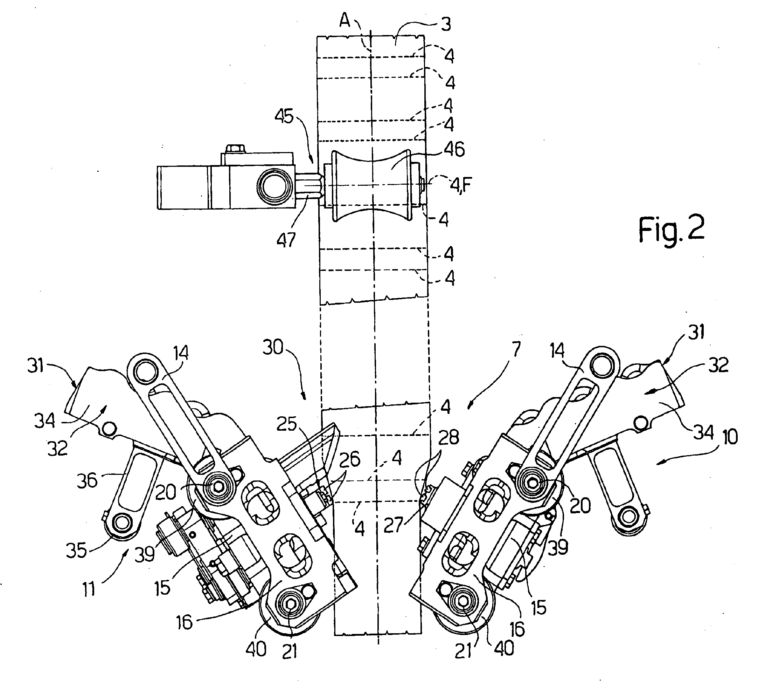

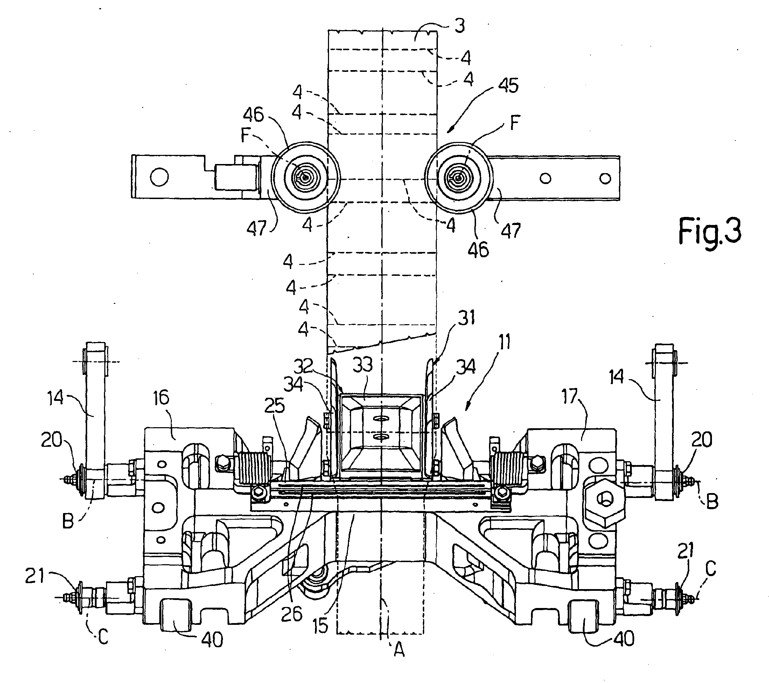

The web of packaging material also has fold or so-called crease lines, along which it is folded to form individual packages 2. Figures 2 and 3 only show the fold lines, indicated 4, extending perpendicularly to path A and pertinent, as explained below, to a clear understanding of the present invention.

Machine 1 substantially comprises a fill conduit 5 (only shown partly in Figure 1) having an end portion 6 extending coaxially inside tube 3 of packaging material to feed it continuously with the sterilized or sterile-processed food product for packaging; and a jaw forming unit 7 for gripping and sealing tube 3 at equally spaced cross sections to form a succession of packages 2.

With particular reference to Figure 1, forming unit 7 comprises two chain conveyors 8, 9 having respective jaws 10, 11 which cooperate with one another to interact with tube 3 of packaging material fed along path A.

Conveyors 8, 9 define respective endless paths P, Q, along which jaws 10, 11 are fed, and which are located symmetrically on opposite sides of path A.

Conveyor 8 comprises an articulated chain 12 extending along path P, and two drive wheels 13 (only one shown in Figure 1) meshing with both sides of chain 12 at the bottom end of path P. Jaws 10 are an integral part, and define alternate links, of chain 12, and are connected to one another in articulated manner by pairs of rods 14.

More specifically, and with reference to all the accompanying drawings, each jaw 10 comprises a main body 15, which is elongated in a direction perpendicular to path A and parallel to the axes of wheels 13, and has respective end enlargements 16, 17, from each of which project a first and second pin 20, 21 having axes B, C spaced apart and parallel to the main dimension of body 15. Rods 14 pivot on pins 20, 21 of jaws 10 to connect pins 20 of one jaw 10 to pins 21 of the adjacent jaw 10.

In the same way, conveyor 9 comprises an articulated chain 22 extending along path Q, and two drive wheels 23 meshing with chain 22 at the bottom end of path Q. Chain 22 is defined by a number of jaws 11 connected to one another in articulated manner, and only described in detail insofar as they differ from jaws 10. Parts of jaws 11 identical or corresponding to parts of jaws 10 described are indicated using the same reference numbers. Briefly, each jaw 11 comprises a main body 15 having pairs of end pins 20, 21, on which pivot rods 14 connecting adjacent pairs of jaws 11.

Each jaw 11 comprises an induction heating member 25 fitted to main body 15 and perpendicular to path A of tube 3. Heating member 25 comprises two straight, parallel active surfaces 26 (Figures 2 and 3), and is powered electrically in known manner, e.g. by contact brushes (not shown) which, in use, slide along a fixed power supply bar (also known and not shown).

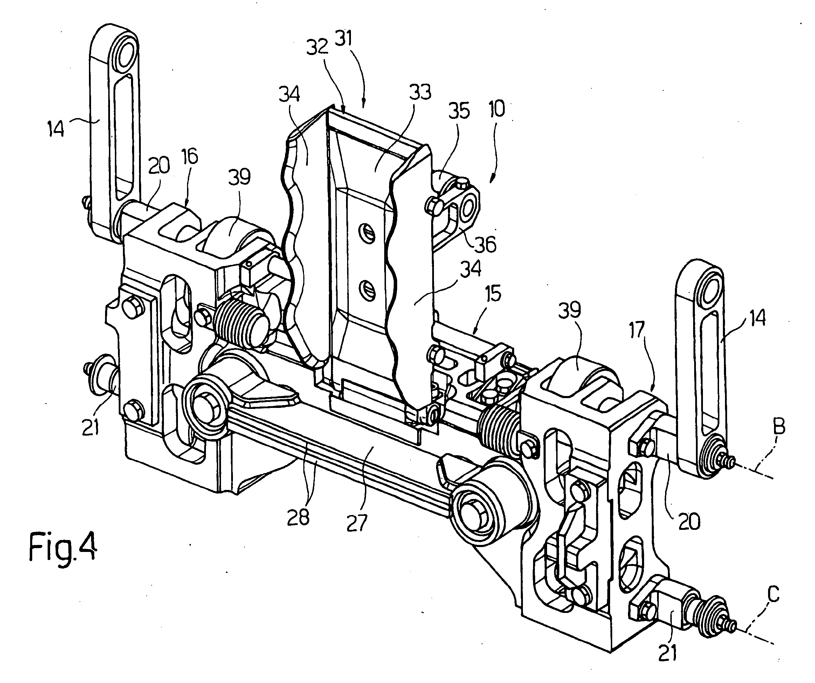

Instead of heating member 25, each jaw 10 (Figures 2 and 4) comprises a pressure bar 27, which cooperates with heating member 25 of the corresponding jaw 11 to firmly grip a cross section of tube 3. On a front surface facing the corresponding jaw 11 in use, bar 27 is fitted in known manner with two strips 28 of relatively flexible elastomeric material, which cooperate with the packaging material in opposition to active surfaces 26 of heating member 25.

In other words, each jaw 10 on conveyor 8, and the corresponding jaw 11 on conveyor 9 define a respective jaw assembly 30 which interacts cyclically with tube 3 of packaging material.

Jaws 10 and 11 also comprise respective devices 31 for controlling the volume of packages 2 when forming the packages. Each device 31 substantially comprises a half-shell 32 hinged to main body 15 about an axis D parallel to axes B, C.

As shown in Figure 2, each half-shell 32 cooperates at the front with a complementary half-shell 32 to form a substantially parallelepiped-shaped cavity for housing a package 2 being formed.

In cross section crosswise to relative path P, Q, each half-shell 32 (Figure 4) is C-shaped, and substantially comprises a main wall 33 which defines one of the walls of package 2 being formed, and two flanges 34 projecting perpendicularly from opposite lateral edges of main wall 33, and which, together with flanges 34 of the complementary half-shell 32, define further parallel walls of package 2 being formed.

Main wall 33 and flanges 34 of each half-shell 32 are advantageously separate members fixed rigidly to one another, so that flanges 34, which are usually subject to greater wear, can be replaced when necessary without changing the whole half-shell 32, thus reducing replacement time and cost.

Each half-shell 32 also comprises a cam follower roller 35 fitted idly to a supporting bracket 36 in turn fitted integrally to the back of relative main wall 33.

Cam follower rollers 35 of jaws 10 and 11 cooperate with respective known fixed cams, as described, for example, in Patent EP-B-0887265 and not shown herein by not being necessary to a clear understanding of the present invention.

The movement of jaws 10 and 11 is controlled by respective pairs of fixed cams 37, 38 (Figure 1) cooperating with respective pairs of cam follower rollers 39, 40 (Figures 2 and 4) fitted to end enlargements 16, 17 of jaws 10 and 11. The rollers 39, 40 in each pair are coaxial respectively with pins 20, 21, and are offset with respect to each other, crosswise to relative path P, Q, so as each to cooperate with the respective cam 37, 38.

More specifically, two pairs of cams 37, 38 (only one pair shown in Figure 1) are fitted on each side of path A, and cooperate with respective pairs of rollers 39, 40 of jaws 10, 11. In other words, on each side of path A, each pair of cams 37, 38 cooperates with a respective enlargement 16, 17 of relative jaws 10, 11.

Cams 37, 38 have respective substantially U-shaped top portions 37a, 38a with their concavities facing downwards to define return portions, opposite respective drive wheels 13 and 23, for respective chains 12, 22 of conveyors 8, 9, and respective portions 37b, 38b extending vertically along one relative side of path A. Portions 37a, 38a define portions P₁, Q₁, along which jaws 10 and 11 move towards and impact tube 3 of packaging material; and portions 37b, 38b define facing, substantially parallel portions P₂, Q₂ of the two paths P, Q, along which jaws 10 and 11 are maintained contacting under pressure to form the seals bounding packages 2 at respective substantially flat transverse sealing strips 41. A continuous strip is thus formed, comprising a number of parallelepiped-shaped container portions 42 connected to one another by transverse strips 41, which are cut either along path A, by means of known cutters (not shown) incorporated in jaws 10 or 11, or downstream from forming unit 7, to form packages 2.

Cams 37, 38 release relative chains 12, 22 at respective portions P₃, Q₃ of paths P, Q, at the output of respective drive wheels 13, 23.

Along portions P₃, Q₃, chains 12, 22 cooperate with respective pairs of tensioners 43 for keeping chains 12, 22 sufficiently taut to ensure contact between rollers 39, 40 of jaws 10, 11 and relative cams 37, 38.

Tube 3 is fed, coaxially with path A, up to a predetermined distance from forming unit 7 by known support and guide assemblies defined, for example, by rollers. For the sake of simplicity, Figure 1 only shows partly, and indicated as a whole by 45, the support and guide assembly located downstream towards forming unit 7. In other words, assembly 45 defines the final support and guide station of tube 3 of packaging material, before tube 3 is fed into forming unit 7.

As shown in Figures 2 and 3, assembly 45 comprises two rollers 46 fitted to and projecting from respective fixed supporting brackets 47 and having respective axes F parallel to each other and perpendicular to path A.

Along vertical path A, assembly 45 is advantageously so located as to act directly on one of fold lines 4 of the packaging material at the so-called "tube-hit" stage, in which jaws 10, 11 are positioned contacting the packaging material and are separated by a distance equal to the final width of package 2 being formed. In other words, at the tube-hit stage, the position of axes F of rollers 46 of assembly 45 along path A coincides, except for inevitable operating tolerances, with the position of one of fold lines 4 of the packaging material. To achieve the desired result, i.e. prevent cracks forming in other parts of the packaging material, a few millimetres difference between the position of axes F of rollers 46 and the position of fold line 4 is acceptable.

Machine 1 operates as follows.

The two conveyors 8, 9 are rotated in opposite directions, as indicated by the arrows in Figure 1, so that respective jaws 10 and 11 cooperate with tube 3 of packaging material from the end of respective portions P₁, Q₁ of paths P, Q and along respective portions P₂, Q₂ with a law of motion determined by the profiles of cams 37, 38.

The operating cycle will now be described in more detail with reference to one jaw assembly 30, i.e. with reference to one jaw 10 of conveyor 8 and the corresponding jaw 11 of conveyor 9, all the jaws 10 and 11 obviously performing the same cycle at time intervals depending on the output rate.

Along portions P₁ and Q₁, jaws 10 and 11 are brought together to gradually deform and eventually "flatten" tube 3 at a transverse strip 41.

At the end of portions P₁, Q₁, devices 31 for controlling the volume of packages 2 are activated; and half-shells 32 of jaws 10 and 11 are brought together frontally to define a parallelepiped-shaped cavity defining the volume of container portion 42 of the package 2 being formed.

Along respective portions P₂, Q₂ of paths P, Q, jaws 10 and 11 are gripped firmly against the tube to fully flatten the relative transverse strip 41; and heating member 25 is powered to seal the two superimposed portions of packaging material forming transverse strip 41. Once sealing is completed, package 2 can be detached from tube 3 by cutting along the centreline of sealing strip 41.

Given the particular location of assembly 45 along path A, i.e. in a position corresponding to any one of fold lines 4 at the tube-hit stage, the pressure on the packaging material contacting rollers 46, caused by the shockwave produced in the food product column by jaws 10 and 11 impacting tube 3, is absorbed by said fold line 4, without producing any cracks elsewhere in the material. It is important to note, in fact, that, being areas of the packaging material designed to deform and fold, fold lines 4 are able to absorb any pressure forces without cracking.

Clearly, changes may be made to machine 1 as described herein without, however, departing from the scope of the present invention as claimed.

In particular, the packaging material may be ultrasound-sealed.

Moreover, the cutting operation may advantageously be performed prior to sealing by heating members 25 of jaws 11.

Finally, machine 1 may even feature only one or two pairs of jaws 10, 11 acting cyclically on tube 3 of packaging material.

## Claims

1. A packaging machine (1) for producing sealed packages (2) of pourable food products from a tube (3) of sheet packaging material fed along a vertical path (A) and having fold lines (4) extending perpendicularly to said vertical path (A); said packaging machine (1) comprising:
- at least one pair of jaws (10, 11) movable cyclically, along respective endless lateral paths (P, Q) extending on opposite sides of said vertical path (A), to grip and seal said tube (3) of packaging material at equally spaced cross sections defining opposite sealing strips (41) of said packages (2) being formed;
- filling means (5) for feeding said tube (3) of packaging material with said food product; and
- at least one support and guide assembly (45) located a given distance from said jaws (10, 11) to feed said tube (3) of packaging material to the jaws (10, 11) coaxially with said vertical path (A);
**characterized in that** said support and guide assembly (45) is so positioned, along said vertical path (A), as to act directly on one of said fold lines (4) of said packaging material when said jaws (10, 11) are positioned contacting said packaging material and are located a given distance apart equal to the final width of the package (2) being formed.

2. A machine as claimed in Claim 1, **characterized in that** the position of said support and guide assembly (45) along said vertical path (A) coincides with the position of one of said fold lines (4) of said packaging material when said jaws (10, 11) are positioned contacting said packaging material and are located a given distance apart equal to the final width of the package (2) being formed.

3. A machine as claimed in Claim 1 or 2, **characterized in that** said support and guide assembly (45) comprises at least two rollers (46) having respective axes (F) parallel to each other and located at one of said fold lines (4) when said jaws (10, 11) are positioned contacting said packaging material and are located a given distance apart equal to the final width of the package (2) being formed.

4. A machine as claimed in Claim 3, **characterized in that** the position of said axes (F) of said rollers (46) along said vertical path (A) coincides with the position of one of said fold lines (4) of said packaging material when said jaws (10, 11) are positioned contacting said packaging material and are located a given distance apart equal to the final width of the package (2) being formed.

5. A machine as claimed in any one of the foregoing Claims, **characterized by** comprising a first chain conveyor (8) having a number of first jaws (10) and defining an endless first lateral path (P) along which said first jaws (10) travel; and a second chain conveyor (9) having a number of second jaws (11) and defining an endless second lateral path (Q) along which said second jaws (11) travel; said first and said second path (P, Q) comprising respective work portions (P₂, Q₂) adjacent to said vertical path (A) of the tube (3) of packaging material, and extending substantially symmetrically on opposite sides of said vertical path (A), so that said first jaws (10) cooperate with respective said second jaws (11) to grip and seal said tube (3) at respective equally spaced cross sections.

## Patentansprüche

1. Verpackungsmaschine (1) zur Herstellung versiegelter Verpackungen (2) für schütt- bzw. fließfähige Nahrungsmittelprodukte aus einem Schlauch (3) aus bahnförmigem Verpackungsmaterial, welches entlang einem vertikalen Pfad (A) geführt wird und Faltlinien (4) aufweist, die sich rechtwinklig zu den vertikalem Pfad (A) erstrecken; wobei die Verpackungsmaschine (1) aufweist:
- mindestens ein Paar periodisch bzw. zyklisch drehbarer Backen (10, 11), entlang zugehöriger seitlicher Endlospfade (P, Q), die sich an gegenüberliegenden Seiten des vertikalen Pfads (A) erstrecken, um den Schlauch (3) aus Verpackungsmaterial bei gleich weit beabstandeten Querschnitten zu greifen und zu versiegeln, wobei definierte entgegengesezte bzw. gegenüberliegende Versiegelungsstreifen (41) zu den Verpackungen (2) geformt werden;
- Einfüllmittel (5) zur Befüllung des Schlauchs (3) aus Verpackungsmaterial mit dem Nahrungsmittelprodukt; und
- mindestens eine Stütz- und Führungseinheit (45) die in einem vorgegebenen Abstand zu den Backen (10, 11) angeordnet ist, um den Schlauch (3) aus Verpackungsmaterial den Backen (10, 11) koaxial zu dem vertikalen Pfad (A) zuzuführen
**dadurch gekennzeichnet, dass**
die Stütz- und Führungseinheit (45) entlang dem vertikalen Pfad (A) positioniert ist, um direkt an einer der Faltlinien (4) des Verpackungsmaterials zu wirken, wenn die Backen (10, 11) in Kontakt mit dem Verpackungsmaterial positioniert werden und in einem vorgegebenen Abstand gleich der Endbreite der geformten Verpackung (2) voneinander angeordnet werden.

2. Maschine nach Anspruch 1, **dadurch gekennzeichnet, dass** die Position der Stütz- und Führungseinheit (45) entlang dem vertikalen Pfad (A) sich mit der Position einer der Faltlinien (4) des Verpackungsmaterials deckt, wenn die Backen (10, 11) in Kontakt mit dem Verpackungsmaterial positioniert und in einem vorgegebenen Abstand gleich der Endbreite der geformten Verpackung (2) voneinander angeordnet werden.

3. Eine Maschine nach Anspruch 1 oder 2, **dadurch gekennzeichnet, dass** die Stütz- und Führungseinheit (45) mindestens zwei Rollen (46) umfasst, die jeweils Achsen (F) haben, die zueinander parallel sind und an einer der Faltlinien (4) angeordnet sind, wenn die Backen (10, 11) in Kontakt mit dem Verpackungsmaterial positioniert und in einem vorgegebenen Abstand gleich der Endbreite der geformten Verpackung (2) voneinander angeordnet werden.

4. Maschine nach Anspruch 3, **dadurch gekennzeichnet, dass** sich die Position der Achsen (F) der Rollen (46) entlang den vertikalen Pfad (A) mit der Position einer der Faltlinien (4) des Verpackungsmaterials deckt, wenn die Backen (10, 11) in Kontakt mit dem Verpackungsmaterials positioniert und in einem vorgegebenen Abstand gleich der Endbreite der geformten Verpackung (2) voneinander angeordnet werden.

5. Maschine nach einem der vorhergehenden Ansprüche, **dadurch gekennzeichnet, dass** diese einen ersten Kettenförderer (8) umfasst, der eine Anzahl erster Backen (10) aufweist und einen ersten seitlichen Endlospfad (P) definiert, entlang dem sich die ersten Backen (10) bewegen; und einen zweiten Kettenförderer (9), der eine Anzahl zweiter Backen (11) aufweist und einen zweiten seitlichen Endlospfad (Q) definiert, entlang dem sich die zweiten Backen (11) bewegen; wobei der erste und der zweite Pfad (P, Q) zugehörige Arbeitsbereiche (P2, Q2) angrenzend an dem vertikalen Pfad (A) des Schlauchs (3) aus Verpackungsmaterial aufweisen, und sich im Wesentlichen symmetrisch auf gegenüberliegenden Seiten des vertikalen Pfads (A) erstrecken, so dass die erste Backen (10) mit den zugehörigen zweiten Backen (11) zusammenwirken um den Schlauch (3) an jeweils gleich beabstandeten Querschnitten zu greifen und zu versiegeln.

## Revendications

1. Machine de conditionnement (1) destinée à produire des emballages scellés (2) de produits alimentaires fluides à partir d'un tube (3) de matériau de conditionnement en feuille délivré suivant un trajet vertical (A) et présentant des lignes de pliage (4) s'étendant perpendiculairement audit trajet vertical (A) ; ladite machine de conditionnement (1) comprenant :
- au moins une paire de mâchoires (10, 11) pouvant être déplacées de manière cyclique suivant des trajets latéraux sans fin respectifs (P, Q) s'étendant sur les côtés opposés dudit trajet vertical (A), de manière à saisir et à sceller ledit tube (3) de matériau de conditionnement au niveau de sections transversales régulièrement espacées définissant des bandes de scellement opposées (41) desdits emballages (2) en cours de formation ;
- des moyens de remplissage (5) afin de remplir ledit tube (3) de matériau de conditionnement avec ledit produit alimentaire ; et
- au moins un ensemble de support et de guidage (45) situé à une distance donnée desdites mâchoires (10, 11) afin de délivrer ledit tube (3) de matériau de conditionnement sur les mâchoires (10, 11) coaxialement par rapport audit trajet vertical (A) ;
**caractérisée en ce que** ledit ensemble de support et de guidage (45) est positionné, suivant ledit trajet vertical (A), de manière à agir directement sur l'une desdites lignes de pliage (4) dudit matériau de conditionnement lorsque lesdites mâchoires (10, 11) sont positionnées en contact avec ledit matériau de conditionnement et sont écartées d'une distance donnée égale à la largeur finale de l'emballage (2) en cours de formation.

2. Machine selon la revendication 1, **caractérisée en ce que** la position dudit ensemble de support et de guidage (45) suivant ledit trajet vertical (A) coïncide avec la position de l'une desdites lignes de pliage (4) dudit matériau de conditionnement lorsque lesdites mâchoires (10, 11) sont positionnées en contact avec ledit matériau de conditionnement et sont séparées d'une distance donnée égale à la largeur finale de l'emballage (2) en cours de formation.

3. Machine selon la revendication 1 ou 2, **caractérisée en ce que** ledit ensemble de support et de guidage (45) comprend au moins deux rouleaux (46) présentant des axes respectifs (F) parallèles l'un par rapport à l'autre et situés au niveau d'une desdites lignes de pliage (4) lorsque lesdites mâchoires (10, 11) sont positionnées en contact avec ledit matériau de conditionnement et sont séparées d'une distance donnée égale à la largeur finale de l'emballage (2) en cours de formation.

4. Machine selon la revendication 3**, caractérisée en ce que** la position desdits axes (F) desdits rouleaux (46) suivant ledit trajet vertical (A) coïncide avec la position de l'une desdites lignes de pliage (4) dudit matériau de conditionnement lorsque lesdites mâchoires (10, 11) sont positionnées en contact avec ledit matériau de conditionnement et sont séparées d'une distance donnée égale à la largeur finale de l'emballage (2) en cours de formation.

5. Machine selon l'une quelconque des revendications précédentes, **caractérisée par le fait qu'**elle comprend un premier convoyeur à chaîne (8) présentant un certain nombre de premières mâchoires (10) et définissant un premier trajet latéral sans fin (P) le long duquel se déplacent lesdites premières mâchoires (10) ; et un second convoyeur à chaîne (9) présentant un certain nombre de secondes mâchoires (11) et définissant un second trajet latéral sans fin (Q) le long duquel se déplacent lesdites secondes mâchoires (11) ; ledit premier et ledit second trajets (P, Q) comprenant des parties actives respectives (P₂, Q₂) adjacentes audit trajet vertical (A) du tube (3) de matériau de conditionnement, et s'étendant de manière sensiblement symétrique sur les côtés opposés dudit trajet vertical (A), de telle sorte que lesdites premières mâchoires (10) coopèrent avec lesdites secondes mâchoires respectives (11) de manière à saisir et à sceller ledit tube (3) au niveau de sections transversales régulièrement espacées respectives.
